# EUROPEAN PATENT APPLICATION

(11) **EP 4 375 308 A1**
(43) Date of publication of application: **29.05.2024**
(21) Application number: 22209896.4
(22) Date of filing: 28.11.2022
(51) Int. Cl.: C08G 59/17, C08G 59/40, C09J 163/00, C08F 2/50, C08F 220/18, C08F 291/10, C09J 4/06, C09J 133/06, C09J 7/38

(54) **UV LED CURABLE HOTMELT PRESSURE SENSITIVE ADHESIVE COMPOSITION**

(71) Applicant: Henkel AG & Co. KGaA, 40589 Düsseldorf (DE)
(72) Inventor: Arnold, Moritz, 41836 Hückelhoven (DE); Taden, Andreas, 40597 Düsseldorf (DE); Schneider, Anja, 40547 Düsseldorf (DE); Roschkowski, Thomas, 40229 Düsseldorf (DE)

(57) **Abstract**

The present invention refers to a UV LED curable hotmelt pressure sensitive adhesive composition, a method for its production as well as an article comprising a first substrate and a second substrate adhered to each other with the adhesive composition according to the invention.

## Description

The present invention refers to a UV LED curable hotmelt pressure sensitive adhesive composition, a method for its production as well as an article comprising a first substrate and a second substrate adhered to each other with the adhesive composition according to the invention.

Hot melt adhesives provide several advantages over solvent-based adhesives in that volatile organic compounds are reduced or even eliminated, they have a long shelf life and can usually be disposed of without special precautions. As pressure sensitive adhesives, they are used in pressure-sensitive tapes, labels, glue dots, stickers, sticky note pads, automobile trim and a wide variety of other products.

US 9,469,794 discloses an UV cross-linkable acrylic pressure sensitive adhesive comprising an acrylic copolymer and a cationic photoinitiator, the acrylic copolymer comprising pendant reactive functional groups.

US 10,711,166 relates to UV curable adhesive composition comprising a) a UV curable acrylic polymer comprising at least one covalently bound UV-reactive group, wherein the at least one covalently bound UV-reactive group is benzophenone; b) a cationic photoinitiator, c) a photosensitizer; and d) an unsaturated oligomer, wherein the UV-curable acrylic polymer is built from mono-acrylic monomers having a formula of CH₂=CH(R¹)(COOR²), wherein R¹ is H or CH₃ and R² is a branched or unbranched C1 to 20 alkyl chain.

US 8,796,350 refers to an ultra-violet curable pressure sensitive adhesive composition comprising an acrylic polymer and a cationic photoinitiator, wherein said acrylic polymer is prepared from a group consisting of: (i) an acrylic monomer consisting of an acrylic or methacrylic acid derivative of the formula CH₂=CH(R¹)(COOR²), wherein R¹ is H or CH₃ and R² is C1-20 alkyl chain; (ii) a monomer, wherein said monomer comprises a pendant reactive functional group selected from cycloaliphatic epoxide, oxetane or mixtures thereof, and contains from about 0.001 to about 0.015 equivalent per 100 g of said acrylic polymer, wherein the acrylic polymer (a) is essentially free of multi(meth)acrylate, (b) has a T_{g} value less than 0 °C and (c) has a weight average molecular weight from about 50,000 to about 1,000,000 g/mol; and wherein the ultra-violet curable pressure sensitive adhesive has a viscosity range of 1,000-500,000 mPas at 80-180 °C.

US 2019/0085221 describes an UV-curable pressure sensitive acrylic adhesive obtainable by reacting in a first step a mixture comprising: (i) at least one acrylic monomer of formula CH₂=CH(R¹)(COOR²R³CH₃)ₙ wherein R¹ is H or CH₃ and wherein R² and R³ are both H or both CH₃ and n is an integer from 0 to 22 or mixtures thereof; and (ii) at least one monomer which comprises a pendant reactive functional group selected from cycloaliphatic epoxides, oxetanes, monosubstituted oxiranes or mixtures thereof; and in a second step reacting the obtained mixture from the first step with (iii) at least one cationic photoinitiator; and (iv) optionally further additives.

UV curable pressure sensitive adhesives are normally cured using standard mercury lamps as irradiation source. However, those bulbs consume a lot of energy and they are expected to be banned within the next years due to their bad environmental profile regarding energy consumption, lifetime and health hazard of mercury. Efforts are therefore being made to develop pressure sensitive hot melt adhesives which are curable by other irradiation sources, preferably LED.

In their publication "Specific cationic photoinitiators for near UV and visible LEDs: lodonium versus ferrocenium structures", published in Journal of Applied Polymer Science, 2015, 42759, H. Mokbel *et al* investigate two iodonium salts based on a coumarin chromophore for polymerization upon light emitting diode irradiations (LEDs).

M. Rodrigues et al conducted a study on the cationic photopolymerization of tetrahydrofuran initiated by irradiation at 366 nm of a solution containing a sulfonium salt and thioxanthone in dichloromethane. The results are published in "Mechanistic Study of Tetrahydrofuran Polymerization Photointiated by a Sulfonium Salt/Thioxanthone System", Macromol. Chem. Phys. 2001, 202, 2776-2782.

D. Nowak et a/ in "Photopolymerization of hybrid monomer Part I: Comparison of the performance of selected photoinitiators in cationic and free-radical polymerization of hybrid monomer", published in Polymer Testing 64 (2017) 313-320, report about the photopolymerization of the hybrid monomers 3,4-epoxycyclohexylmethyl methacrylate and 2-(2-vinyloxyethoxy)ethyl acrylate by Fluorescence Probe Technique.

When adapting current systems to be curable by other irradiation sources than mercury bulbs, certain aspects have to be taken into consideration, including the fact that the hot melt adhesives have to be curable effectively at high belt speeds on industrial coaters and a temperature stability of up to 130 °C is required.

Current efforts are limited by the poor absorption in the UVA region of commercially available cationic photoinitiators. While efforts are undertaken to overcome the poor absorption pattern by either using modified iodonium salts or using standard iodonium salts in combination with sensitizers, both approaches were found to be not applicable to hotmelt adhesives as they lead to an instable product at higher temperatures. In addition, these systems were found to be unsuitable for fast curing on industrial coaters where it is important not to be dependent on dark curing.

There is therefore still a need for hotmelt pressure sensitive adhesive which are curable by UV-LED at high belt speeds on industrial coaters. The object of the present invention therefore lies in addressing said need and to provide a UV-LED curable hotmelt pressure sensitive adhesive for industrial applications.

Within the course of the present invention, it was surprisingly found that this object is solved by a composition comprising an acrylic-epoxy copolymer in combination with a specific photoinitiator/photosensitizer system.

Therefore, a first object of the present invention is an UV-LED curable hotmelt pressure sensitive adhesive composition comprising:
a. an acrylic-epoxy-copolymer;
b. at least one sulfonium-salt based photoinitiator, and
c. at least one Thioxanthone-based photosensitizer.

The adhesive composition of the present invention was found to be curable under LED irradiation, even at high belt speeds, thus eliminating the need for mercury bulbs.

In a preferred embodiment of the present invention, the acrylic-epoxy-copolymer is prepared from a monomeric acrylic mixture copolymerized with a cycloaliphatic epoxide. Preferably, the acrylic mixture comprises at least one aliphatic acrylic monomer of the general structure (I): 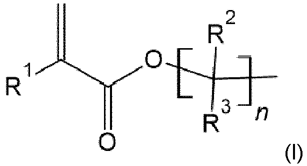
wherein R¹ is C1-C18 alkyl or H,
R² is H or CH₃
R³ is H or CH₃
n is an integer from 0 to 18

Preferably, the acrylic monomer mixture comprises at least one hard acrylic monomer and at least one soft acrylic monomer. Therefore, in a preferred embodiment, the monomeric acrylic mixture comprises at least one first acrylate selected from the group consisting of methylacrylate, ethylacrylate and iso-butylacrylate and at least one second acrylic monomer selected from the group consisting of 2-ethylhexylacrylate, n-butylacrylate, 2-propylheptylacrylate and iso-decylacrylate.

The acrylic-epoxy copolymer comprised in the adhesive composition of the present invention is obtained from a reaction mixture comprising a mixture of acrylic monomers and at least one epoxy acrylic monomer of a general structure (II): 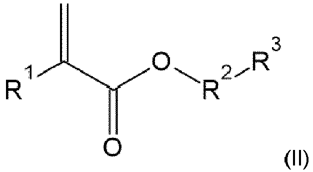
wherein R¹ is C1-C18 alkyl or H,
R² is C1-C18 alkyl or C1-C18 alkoxy
R³ is a cycloaliphatic epoxy or an epoxy group

Preferably, the at least one epoxy acrylic monomer is selected from the group consisting of 3,4-epoxycyclohexylmethyl methacrylate or glycidyl methacrylate.

The acrylic-epoxy copolymer is preferably obtained via solution polymerization. Preferred solvents are those selected from the group consisting of ethylacetate, butanone, heptane, hexane, pentanone, acetone, toluene, propylacetate, benzene and mixtures thereof.

The molecular mass of the acrylic-epoxy copolymer can be adjusted according to need but is preferably kept within a weight average molecular weight M_{w} of 50,000 to 400,000 Da, preferably between 50,000 and 250,000 Da determined according to GPC with polystyrene as standard.

The adhesive composition of the present invention comprises at least one sulfonium-salt based photoinitiator. In a preferred embodiment, the sulfonium-salt based photoinitiator is represented by general formula (III): 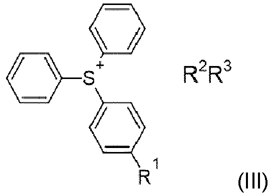
wherein R¹ is selected from H, Aryl, Thioaryl, C1-C18 Alkyl, C1-C18 Alkoxy, SH or NR₂
R² is selected from P, Sb, B, As or Bi and
R³ is F6- or F₃(C₂F₅)₃-

In an especially preferred embodiment, the at least one sulfonium-salt based photoinitiator is selected from the group consisting of ([1,1'-biphenyl]-4-yl)(diphenyl)sulfonium trifluoro[tris(pentafluoroethyl)]-phosphate or triarylsulfonium hexafluoro antimonate salt.

In addition to the at least one sulfonium-salt based photoinitiator, the adhesive composition also comprises at least one Thioxanthone-based photosensitizer. It was surprisingly found that in particular the combination of the sulfonium-salt based photoinitiator and the Thioxanthone-based photosensitizer with the acrylic-epoxy copolymer provided a hotmelt pressure sensitive adhesive that could be readily cured under UV-LED irradiation. In a preferred embodiment, the at least one Thioxanthone-based photosensitizer is represented by general formular (IV): 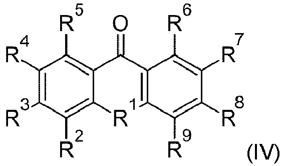
wherein R¹ is NH, CH₂, S or O and
R² to R⁹ are independently H, C1-C18 alkyl or iso alkyl, C1-C18 alkoxy, aryl, COOH, OH, NR₂, COOR, Urea, Urethane, S or SH,

At least one of R² to R⁹ may consist of a polymerizable group in the structure of A-B-C, where
A is O, NR₂, S, C1-C18 alkyl or iso alkyl, COOH, C1-C18 alkoxy, S or aryl,
B is C1-C18 alkyl or iso alkyl, carboxy, vinyl based or aryl,
C is acrylic or methacrylic, epoxy or cycloaliphatic epoxy, vinyl based or aryl.

In an especially preferred embodiment of the present invention, the Thioxanthone-based photosensitizer is selected from the group consisting of Isopropylthioxanthone, 2,4-Diethyl-9H-thioxanthen-9-one or derivatives thereof.

The adhesive composition of the present invention may comprise further additives, such as plasticizers, tackifiers, antioxidants and fillers. It was surprisingly found that conventionally used additives could be employed without affecting the UV-LED curability of the inventive adhesive composition.

Hotmelt adhesives are characterized by being solid at room temperature. They are applied in a molten state at elevated temperatures. In order to preserve valuable energy, hotmelt adhesives are preferred which can be applied at comparably low temperatures. While conventional hotmelt adhesives usually require temperatures of around 160 to 175 °C, it was surprisingly found that the hotmelt adhesive composition according to the present invention could be applied at much lower temperatures. In a preferred embodiment, the adhesive composition according to the present invention is therefore characterized by an application temperature 60 to 150 °C, preferably 100 to 130 °C, more preferably 110 to 120 °C.

The adhesive composition according to the present invention is intended for industrial scale application, in particular application by industrial coaters. In order to be compatible with existing systems, the curing temperature of the hotmelt adhesive composition should be within temperature ranges normally associated with curing by mercury bulbs. It was surprisingly found that this requirement is met by the adhesive composition according to the present invention, despite the fact that curing is initiated by UV-LED. Therefore, in a preferred embodiment, the hotmelt pressure sensitive adhesive composition of the present invention has a curing temperature of 25 to 150 °C, preferably 25 to 110 °C.

The hotmelt adhesive composition according to the present invention is designed for use in combination with the high belt speed of industrial coaters. In order to be easily applicable, the viscosity of the inventive adhesive composition is preferably 10,000 to 130,000 mPa*s at 120 °C, more preferably 20,000 to 100,000 mPas at 120 °C, determined with Brookfield DV-II, SP. 27

Further, the inventive hotmelt pressure sensitive adhesive composition is UV-curable, in particular by UV radiation generated by LEDs. Therefore, in a preferred embodiment, the adhesive composition is curable at a UVA dose of 100 to 10,000 mJ/cm², preferably 300 to 3,000 mJ/cm², determined according to UV radiometric Puk measurement (here: EIT Power Puk II). By being curable at the defined UVA doses, the need for mercury bulbs can be eliminated and more energy-efficient LEDs can be employed.

In a preferred embodiment, the adhesive composition according to the invention is characterized in that the cured adhesive has a shear adhesion failure temperature (SAFT) of 50 to 200 °C, preferably 120 to 200 °C, determined according to GTF 6001 (Afera 5013).

Apart from being UV-LED curable, the adhesive composition to the invention further shows excellent adhesion properties when cured. In a preferred embodiment, the cured adhesive exhibits a performance in 180° Peel on Steel substrate at 300 mm/min of 2 to 45 N/25 mm, preferably 5 to 35 N/25 mm, determined according to DIN ES ISO 11339/2010-06. Accordingly cured polymer films at thickness of 15-150gsm, irradiated with 100-5,000 mJ/cm².

A further object of the present invention is a method for producing the hotmelt pressure sensitive adhesive composition according to the invention. According to the inventive method, an acrylic monomer mixture is copolymerized with a cycloaliphatic epoxide and the obtained acrylic-epoxy-copolymer is formulated with at least one sulfonium-salt based photoinitiator and at least one

Thioxanthone-based photosensitizer to yield the adhesive composition. Copolymerization in solution polymerization allows crosslinking the polymer by cationic polymerization

The solvent employed is preferably selected from the group consisting of ethylacetate, butanone, heptane, hexane, pentanone, acetone, toluene, propylacetate, benzene and mixtures thereof.

The acrylic monomer mixture and the cycloaliphatic epoxide are preferably copolymerized in the presence of a polymerization initiator. The polymerization initiator is preferably selected from the group consisting of Azzo initiators like AIBN, AMBN or ACCN. Preferably, the polymerization initiator is employed in an amount of 0.01 to 5% based on the total weight of the acrylic monomer mixture and the cycloaliphatic epoxide.

In a preferred embodiment, the method of the present invention comprises the steps of copolymerizing an acrylic monomer mixture and a cycloaliphatic epoxide in a solvent polymerization, preferably in the presence of a polymerization initiator, followed by formulation of the obtained copolymer with a sulfonium-salt based photoinitiator and a Thioxanthone-based photosensitizer to obtain the adhesive composition of the invention after removal of the solvent.

The sulfonium-salt based photoinitiator is preferably employed in an amount of 0.001 to 5 wt-%, preferably 0.001 to 3.5 wt.-% based on the total weight of the adhesive composition.

The Thioxanthone-based photosensitizer is preferably employed in an amount of 0.001 to 5 wt.-%, preferably 0.001 to 3.5 wt.-% based on the total weight of the adhesive composition.

A further object of the present invention is an article obtained under use of the hotmelt pressure sensitive adhesive composition of the present invention. The article comprises a first substrate and a second substrate adhered to each other with an adhesive composition according to the present invention. In a preferred embodiment, the article is selected from the group consisting of polymeric foil substrates, polymeric substrates, metal substrates, glass substrates or wood substrates or paper substrates.

The present invention will be explained in more detail with reference to the following examples which, however, are by no means to be understood as limiting the scope and spirit of the present invention.

### Example 1: Preparation of the UV curable polymer

First an acrylic copolymer is made by free radical copolymerization of approximately 45 wt% methylacrylate and 54 wt% 2-EHA. In addition, around 1 wt% of Epoxyacrylate M100 is copolymerized. The polymerization is done in ethylacetate and initiated with an Azo-Initiator like AIBN (0.11%). After the polymerization, the polymerization product is formulated with 0.5 g Irganox 1726, 0.5 g of cationic photoinitiator CPI200K (50% solution in propylene carbonate) and 0.25 g of Isopropylthioxanthone (ITX) as sensitizer. Next the ethylacetate is removed under reduced pressure at 120 °C and the acrylic copolymer is obtained. The average weight molecular weight of the acrylic polymer was 120,000 Da (GPC), the hotmelt viscosity (Brookfield, S27) of the polymer is 50,000 mPa*s at 120 °C.

### Example 2: Preparation of the UV curable polymer

First an acrylic copolymer is made by free radical copolymerization of approximately 45 wt% methylacrylate and 54 wt% 2-EHA. In addition, around 2 wt% of Epoxyacrylate M100 is copolymerized. The polymerization is done in ethylacetate and initiated with an Azo-Initiator like AIBN (0.11%). After the polymerization, the polymerization product is formulated with 0.5 g Irganox 1726, 0.5 g of cationic photoinitiator Omnicat320 (50% solution in propylene carbonate) and 0.25 g of Isopropylthioxanthone (ITX) as sensitizer. Next the ethylacetate is removed under reduced pressure at 120 °C and the acrylic copolymer is obtained. The average weight molecular weight of the acrylic polymer 110,000 Da (GPC), the hotmelt viscosity (Brookfield, S27) of the polymer is 75,000 mPa*s at 110 °C.

### Example 3: Preparation of the UV curable polymer

First an acrylic copolymer is made by free radical copolymerization of approximately 45 wt% ethylacrylate and 54 wt% 2-propylheptyl-acrylate. In addition, around 1-2 wt% of Epoxyacrylate M100 is copolymerized. The polymerization is done in ethylacetate and initiated with an Azo-Initiator like AIBN (0.11w%). After the polymerization, the polymerization product is formulated with 0.5 g Irganox 1726, 0.5 g of cationic photoinitiator Omnicat320 (50% solution in propylene carbonate) and 0.25 g of Isopropylthioxanthone (ITX) as sensitizer. Next the solvent is removed under reduced pressure at 120 °C and the acrylic copolymer is obtained. The average weight molecular weight of the acrylic polymer 120,000 Da (GPC), the hotmelt viscosity (Brookfield, S27) of the polymer is 50,000 mPa*s at 120 °C.

### Example 4: Preparation of the UV curable polymer

First an acrylic copolymer is made by free radical copolymerization of 45 wt% methylacrylate and 54 wt% isodecylacrylate. In addition, around 1-2 wt% of Epoxyacrylate M100 is copolymerized. The polymerization is done in ethylacetate or butanone and initiated with an Azo-Initiator like AIBN (0.11 w%). After the polymerization, the polymerization product is formulated with 0.5 g Irganox 1726, 1 g of cationic photoinitiator Omnicat320 (50% solution in propylene carbonate) and 0.5 g of Isopropylthioxanthone (ITX) as sensitizer. Next the solvent is removed under reduced pressure at 120 °C and the acrylic copolymer is obtained. The average weight molecular weight of the acrylic polymer 120,000 Da (GPC), the hotmelts viscosity (Brookfield, S27) of the polymer is 50,000 mPa*s at 120 °C.

### Example 5: Preparation of the UV curable polymer

First an acrylic copolymer is made by free radical copolymerization of 45 wt% methylacrylate and 54 wt% 2-EHA. In addition, around 1-2 wt% of Epoxyacrylate M100 is copolymerized. The polymerization is done in ethylacetate or butanone and initiated with an Azo-Initiator like AIBN (0.11 w%). After the polymerization, the polymerization product is formulated with 0.5 g Irganox 1726, 0.5-1 g of cationic photoinitiator CPI200K (50% solution in propylene carbonate). Next the solvent is removed under reduced pressure at 120 °C and the acrylic copolymer is obtained. The average weight molecular weight of the acrylic polymer is 175,000 Da (GPC), the hotmelts viscosity (Brookfield, S27) of the polymer is around 75,000 mPa*s at 120 °C.

### Example 6: Coating and curing of the acrylic copolymer

The acrylic copolymer is coated via a lab coater where both rolls can be heated to 120-130 °C. Prior to that the polymer is preheated to 120 °C in an oven. The adhesive is coated on a 50 µm thick silicone release liner to a thickness of 80 µm. After the coating has been made, the adhesive is irradiated with a 365 nm LED with a UVA dose of 1,500 mJ/cm². The adhesive film is laminated with etched polyethylene terephthalate (PET) foil (50 µm) and conditioned at 23 °C and 50% rel. humidity for 24h.

### Example 7: Peel measurements of adhesive films

The cured adhesive films where cut to three test stripes of 25 mm x 150 mm size after conditioning. Stainless steel plates (Rocholl) were cleaned with ethylacetate and acetone and dried for 30 minutes at 23 °C and 50% rel. humidity. The back paper of adhesive test stripes was removed, and the stripes were placed along the stainless-steel plates. All samples were rolled with a 2 kg FINAT roller twice in each direction at a speed of 10 mm/s. After that the test stripes where conditioned for 20 minutes at 23 °C and 50% rel. humidity. The ZWICK tensile tester was set to a speed of 300 mm/minute and the free end of the tape was put into the upper jaw. The steel plate was fixed into the lower jaw and the stripes were peeled off from the steel substrate in 180° angle according to AFERA 4001 / DIN EN ISO 11339:2010-06.

### Example 8: Shear Adhesion Failure Test (SAFT)

For this test three stripes of 25 mm x 70 mm size were cut from a cured and conditioned adhesive. SAFT steel plate samples were cleaned with ethylacetate and acetone and conditioned at 23 °C, 50% rel. humidity for 30 minutes. The back paper of test stripes was removed, and the stripes were put onto the steel substrate to a square of 25 mm x 25 mm test area. All stripes were rolled with a 2 kg FINAT roller twice in every direction at a speed of 10 mm/s. After rolling the test hooks were fixed to the test stripes and all samples were conditioned for further 30 minutes at 23 °C, 50% rel. humidity for 30 minutes. Next the samples were put into the test oven, a 1 kg weight was attached to the hook and the oven was heated to 200 °C with a ramp of 0.5 °C/minute. Test method according to GTF 6001 (Afera 5013).

## Claims

1. UV-LED curable hotmelt pressure sensitive adhesive composition comprising:
a. an acrylic-epoxy-copolymer;
b. at least one sulfonium-salt based photoinitiator, and
c. at least one Thioxanthone-based photosensitizer.

2. Adhesive composition according to claim 1, **characterized in that** the acrylic-epoxy-copolymer is prepared from monomeric acrylic mixture copolymerized with a cycloaliphatic epoxide.

3. Adhesive composition according to claim 2, **characterized in that** the acrylic mixture comprises at least one aliphatic acrylic monomer of the general structure (I): 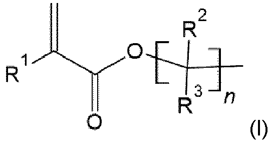
wherein R¹ is C1-C18 alkyl, or H
R² is H or CH₃
R³ is H or CH₃
n is an integer from 0 to 18

4. Adhesive composition according to claim 3, **characterized in that** the monomeric acrylic mixture comprises at least one acrylate selected from the group consisting of methylacrylate, ethylacrylate and iso-butylacrylate and at least on acrylic monomer selected from the group consisting of 2-ethylhexylacrylate, n-butylacrylate, 2-propylheptylacrylate and iso-decylacrylate.

5. Adhesive composition according to any of claims 2 to 4, **characterized in that** an epoxy acrylic monomer of the general structure (III) is copolymerized: 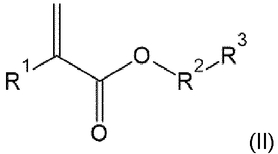
wherein R¹ is C1-C18 alkyl or H
R² is C1-C18 alkyl or C1-C18 alkoxy
R³ is a cycloaliphatic epoxy or epoxy group

6. Adhesive composition according to any of claims 2 to 5, **characterized in that** the acrylic-epoxy-copolymer is obtained via solution polymerization, preferably in a solvent selected from the group consisting of ethylacetate, butanone, heptane, hexane, pentanone, acetone, toluene, propylacetate, benzene and mixtures thereof.

7. Adhesive composition according to any of the forgoing claims, **characterized in that** the at least one sulfonium-salt based photoinitiator is represented by general formula (III): 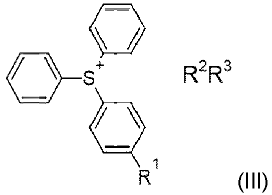
wherein R¹ is selected from H, Aryl, Thioaryl, C1-C18 Alkyl, C1-C18 Alkoxy, SH or NR₂
R² is selected from P, Sb, B, As or Bi and
R³ is F6- or F₃(C₂F₅)₃-

8. Adhesive composition according to any of the forgoing claims, **characterized in that** the at least one Thioxanthone-based photosensitizer is represented by general formular (IV): 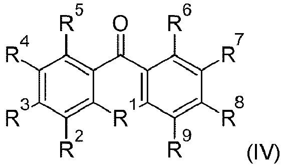
wherein R¹ is NH, CH₂, S or O and
R² to R⁹ are independently H, C1-C18 alkyl or iso alkyl, C1-C18 alkoxy, aryl, COOH, OH, NR₂, COOR, Urea, Urethane, S or SH

9. Adhesive composition according to any of the forgoing claims, **characterized in that** the application temperature of the adhesive composition is 60 to 150 °C, preferably 100 to 130 °C, more preferably 110 to 120 °C.

10. Adhesive composition according to any of the forgoing claims, **characterized in that** the adhesive composition is curable at a UVA dose of 100 to 10,000 mJ/cm², preferably 300 to 3,000 mJ/cm², determined according to UV radiometric Puk measurement (here: EIT Power Puk II)

11. Adhesive composition according to any of the forgoing claims, **characterized in that** the cured adhesive has a shear adhesion failure temperature (SAFT) of 50 to 200 °C, preferably 120 to 200 °C, determined according to GTF 6001 (Afera 5013).

12. Adhesive composition according to any of the forgoing claims, **characterized in that** the cured adhesive exhibits a performance in 180° Peel on Steel substrate at 300 mm/min of 2 to 45 N/25 mm, preferably 5 to 35 N/25 mm, determined according to DIN ES ISO 11339/2010-06.

13. Method for producing an adhesive composition according to any of the forgoing claims, wherein an acrylic monomer mixture is copolymerized with a cycloaliphatic epoxide and the obtained acrylic-epoxy-copolymer is formulated with at least one sulfonium-salt based photoinitiator and at least one Thioxanthone-based photosensitizer to yield the adhesive composition.

14. The method of claim 13, **characterized in that** copolymerization is performed in a solvent selected from the group consisting of ethylacetate, butanone, heptane, hexane, pentanone, acetone, toluene, propylacetate, benzene and mixtures thereof.

15. Article comprising a first substrate and a second substrate adhered to each other with an adhesive composition according to any of claims 1 to 12.
